# EUROPÄISCHE PATENTSCHRIFT

(11) **EP 3 687 850 B1**
(45) Veröffentlichungstag und Bekanntmachung des Hinweises auf die Patenterteilung: **03.08.2022**
(21) Anmeldenummer: 18789004.1
(22) Anmeldetag: 26.09.2018
(51) Int. Cl.: B60L 7/02, B60L 7/22, G01K 7/16, G01K 7/18

(54) **VERFAHREN ZUR ERMITTLUNG EINER TEMPERATUR EINER AKTIVEN SCHICHT EINES HEIZWIDERSTANDS**
METHOD FOR DETERMINING THE TEMPERATURE OF AN ACTIVE LAYER OF A HEATING RESISTOR
PROCÉDÉ PERMETTANT DE DÉTERMINER UNE TEMPÉRATURE D'UNE COUCHE ACTIVE D'UNE RÉSISTANCE CHAUFFANTE

(30) Priorität: 27.09.2017 DE 102017217194
(43) Veröffentlichungstag der Anmeldung: 05.08.2020
(73) Patentinhaber: Vitesco Technologies GmbH, 93055 Regensburg (DE)
(72) Erfinder: BENKERT, Maximilian, 93055 Regensburg (DE); SAWAZKI, Egor, 81737 München (DE)
(74) Vertreter: Vitesco Technologies
(86) Internationale Anmeldenummer: PCT/EP2018/076068
(87) Internationale Veröffentlichungsnummer: WO 2019/063591

(56) Entgegenhaltungen:
- EP-A1- 1 610 454
- DE-A1-102004 046 275

## Beschreibung

Die Erfindung betrifft ein Verfahren zur Ermittlung einer Temperatur einer aktiven Schicht eines Heizwiderstands für ein Rekuperations-System eines Kraftfahrzeugs sowie ein Verfahren zum Betrieb eines Rekuperations-Systems. Weiterhin betrifft die Erfindung einen Heizwiderstand für ein Rekuperations-System eines Kraftfahrzeugs. Ergänzende Ansprüche sind auf ein Rekuperations-System mit dem Heizwiderstand und auf ein Fahrzeug mit dem Rekuperations-System gerichtet.

Elektrofahrzeuge sind bekannt, die über einen Heizwiderstand verfügen. Der technische Zweck des Heizwiderstands besteht darin, auch bei einer Traktionsbatterie, welche keine Energie mehr aufnehmen kann (beispielsweise aufgrund von Temperaturverhältnissen oder zu hohem Ladezustand), weiterhin einen Rekuperations-Modus zu ermöglichen. Dies ermöglicht einen geringeren mechanischen Bremsenverschleiß und eine höhere Gesamtenergieeffizienz des Fahrzeugs.

Insbesondere kann generierte elektrische Energie über den Heizwiderstand in Wärme umgewandelt werden, welche über einen Kühlkreislauf abgeführt werden kann. Zur Absicherung eines stabilen Betriebs darf die Temperatur der aktiven Schicht des Heizwiderstands jedoch gewisse Grenzwerte nicht überschreiten. Um dies garantieren zu können, besitzt die aktive Schicht des Heizwiderstands typischerweise einen integrierten Temperatursensor. Außerdem muss ein gewisser Temperaturmindestabstand eingehalten werden, um aufgrund der stets trägen Messung thermischer Größen Übertemperaturen zu vermeiden. Derartige Übertemperaturen können zu einer irreversiblen Schädigung oder zu einer drastischen Verringerung der Lebensdauer des Heizwiderstands führen.

Aus der EP 1 610 454 A1 ist ein Verfahren zur Temperaturbestimmung eines Bremswiderstands bekannt. Die DE 10 2004 046275 A1 offenbart Mittel zur Berechnung einer aktuellen Temperatur eines Bremswiderstands aus einer Spannung und einem Strom.

Falls kein Temperatursensor in der aktiven Heizschicht bzw. im aktiven Heizdraht verbaut ist (beispielsweise aus Kostengründen oder Packaging-Gründen), so muss der Abstand der geschätzten Temperatur zur erlaubten Maximaltemperatur noch größer gewählt werden, um eventuelle Übertemperaturen zu vermeiden. Dies führt zu einer nicht optimalen Nutzung des Heizdrahts, da eine mögliche Leistungsfähigkeit aus Sicherheitsgründen nicht abgerufen werden kann. Weiterhin ist - bedingt durch die hoch dynamische Strombelastung des Heizwiderstands - eine Prädiktion bzw. eine Vorhersage über die Aufnahmefähigkeit elektrischer Energie nur schwerlich möglich.

Eine Aufgabe der vorliegenden Erfindung kann daher darin liegen, ein alternatives Verfahren zur Ermittlung einer Temperatur einer aktiven Schicht eines Heizwiderstands für ein Rekuperations-System eines Kraftfahrzeugs bereitzustellen, wobei durch das Verfahren die Messgeschwindigkeit sowie die Messgenauigkeit erhöht wird und eine genaue Prognose über die noch aufnehmbare elektrische Leistung ermöglicht, sodass der Heizdraht näher an seiner Maximalleistung betrieben werden kann, ohne dass Schädigungsprozesse aufgrund von Übertemperatur stattfinden.

Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Gemäß der vorliegenden Erfindung wird vorgeschlagen, zu einem ersten Zeitpunkt t₁ die Spannung Ui, die an einer aktiven Schicht eines Heizwiderstands anliegt, und den Strom Ii, der durch die aktive Schicht fließt, zu messen. Basierend auf der gemessenen Spannung U₁ und dem gemessenen Strom I₁ wird gemäß dem OHMschen Gesetz der elektrische Widerstand R₁ zu dem ersten Zeitpunkt ermittelt (R₁=U₁/I₁). Da der ohmsche Widerstand temperaturabhängig ist, lässt sich insbesondere mithilfe von in der Leistungselektronik hinterlegten Werten abgleichen, welche Temperatur T₁ zu dem ersten Zeitpunkt t₁ in der aktiven Schicht im Mittel herrscht. Folglich wird vorgeschlagen, aus dem ermittelten elektrischen Widerstand R₁ eine erste Temperatur T₁ der aktiven Schicht zu dem ersten Zeitpunkt t₁ zu ermitteln. Diese genannten Verfahrensschritte können fortlaufend wiederholt werden, sodass kontinuierlich die Temperatur T der aktiven Schicht ermittelt werden kann.

Die vorliegende Erfindung ermöglicht somit, auf den Temperatursensor zu verzichten, welcher über die Nachteile der thermischen Trägheit verfügt. Durch die kombinierte Strom- und Spannungsmessung, welche insbesondere über die Leistungselektronik bereitgestellt werden kann, können die Messgeschwindigkeit sowie die Messgenauigkeit erhöht werden. Weiterhin kann eine genaue Prognose über die noch aufnehmbare elektrische Leistung abgegeben werden. Dadurch kann der Heizwiderstand näher an seiner Maximalleistung betrieben werden, ohne dass die Gefahr von Schädigungsprozessen aufgrund von Übertemperaturen besteht.

In diesem Sinne wird gemäß der Erfindung ein Verfahren zur Ermittlung einer Temperatur einer aktiven Schicht eines Heizwiderstands für ein Rekuperations-System eines Kraftfahrzeugs bereitgestellt. Gemäß dem Verfahren wird ein momentaner Wert eines Stromes ermittelt, welcher durch eine aktive Schicht eines Heizwiderstands fließt. Diese Ermittlung, insbesondere Messung, erfolgt zu einem ersten Zeitpunkt. Weiterhin wird ein momentaner Wert einer Spannung ermittelt, welche an der aktiven Schicht des Heizwiderstands anliegt. Auch diese Ermittlung, insbesondere Messung, erfolgt zu dem ersten Zeitpunkt. Aus dem ermittelten momentanen Wert des Stromes und aus dem ermittelten momentanen Wert der Spannung wird ein momentaner Wert eines elektrischen Widerstands berechnet. Aus dem berechneten Wert des elektrischen Widerstands wird ein momentaner Wert einer Temperatur der aktiven Schicht ermittelt. Diese Verfahrensschritte können insbesondere mittels einer Leistungselektronik des Heizwiderstands durchgeführt werden. Weiterhin können diese Verfahrensschritte wiederholt nacheinander durchgeführt werden, sodass eine kontinuierliche oder nahezu kontinuierliche Ermittlung der Temperatur der aktiven Schicht des Heizwiderstands erfolgt. Durch die Möglichkeit der hohen Messgeschwindigkeit aufgrund des Verzichts auf thermisch träge Sensoren und durch das Vorsehen der Strom- und Spannungsmessung können die Temperatur der aktiven Schicht und damit auch die Leistungsaufnahmefähigkeit des Heizwiderstands hochdynamisch bestimmt werden.

Im Kontext einer "Brems-Betriebsstrategie" ist es sinnvoll, den elektrischen Widerstand und die Temperatur wie vorstehend beschrieben zu ermitteln, und daraus abzuleiten, welche Bremsenergie noch durch den Heizwiderstand aufgenommen werden kann. Wird dabei prädiziert bzw. vorausgesagt, dass noch länger gebremst wird als es die thermische Aufnahmekapazität des Heizwiderstands zulässt, dann kann bereits zu dem Zeitpunkt, an dem dies prädiziert wird, eine Reibbremse aktiviert werden. Insbesondere kann abhängig von dem Verhältnis von thermischer Aufnahmekapazität der aktiven Schicht des Heizwiderstands einerseits und der zu erwartenden generierten Bremsenergie andererseits ein Verhältnis von einzustellender Reibbremskraft zur Rekuperations-Bremskraft ermittelt werden.

In diesem Sinne umfasst das erfindungsgemäße Verfahren ferner den folgenden Schritt:
- Ermitteln einer zukünftigen thermischen Aufnahmekapazität der aktiven Schicht basierend auf dem ermittelten momentanen Wert der Temperatur der aktiven Schicht.

Eine Weiterbildung ist ein Verfahren zum Betrieb eines Rekuperations-Systems mit den zusätzlichen Schritten:
- Vorhersagen einer voraussichtlichen Bremsdauer,
- Ermitteln einer von dem Heizwiderstand aufzunehmenden thermischen Energie basierend auf der vorhergesagten voraussichtlichen Bremsdauer,
- Aktivieren einer Reibbremse des Rekuperations-Systems, sofern die ermittelte, von dem Heizwiderstand aufzunehmende thermische Energie die ermittelte thermische Aufnahmekapazität der aktiven Schicht übersteigt.

Das Ermitteln des momentanen Werts der Temperatur der aktiven Schicht kann weiterhin die folgenden Schritte umfassen
- Hinterlegen von Wertepaaren, die jeweils einen Wert eines elektrischen Widerstands und einen Wert einer Temperatur umfassen, in einer Datenbank,
- Ermitteln desjenigen in der Datenbank hinterlegten Werts des elektrischen Widerstands, welcher dem berechneten momentanen Wert des elektrischen Widerstands der aktiven Schicht am nächsten kommt, und
- Auswählen des in der Datenbank in demselben Wertepaar hinterlegten zugeordneten Werts der Temperatur als momentanen Wert der Temperatur der aktiven Schicht.

Die Wertepaare bzw. die Datenbank können insbesondere in der Leistungselektronik des Heizwiderstands hinterlegt sein und die Leistungselektronik kann dazu eingerichtet sein, die gemäß dieser Ausführungsform ergänzend vorgesehenen Schritte des Ermittelns und Auswählens durchzuführen. Die Implementierung des Ermittelns des momentanen Werts der Temperatur der aktiven Schicht durch Wertepaare ist besonders einfach und robust. Alternativ kann beispielsweise eine Funktion der Temperatur der aktiven Schicht in Abhängigkeit von dem elektrischen Widerstand der aktiven Schicht in der Datenbank hinterlegt sein.

Gemäß einer weiteren Ausführungsform ist vorgesehen, dass das Ermitteln des momentanen Werts des Stroms und das Ermitteln des momentanen Werts der Spannung mittels der Leistungselektronik des Heizwiderstands erfolgen. Um den Heizwiderstand betreiben zu können benötigt man ohnehin eine Leistungselektronik, welche die aktive Schicht des Heizwiderstands mit eingeregeltem Strom sowie Spannung versorgt. Diese Leistungselektronik muss hierbei zur korrekten Funktion eine Messung des transferierten Stroms sowie der anliegenden Spannung durchführen. Da die Messung von Strom und Spannung ohnehin durchgeführt wird, kann hierüber auch die Temperatur der aktiven Schicht des Heizwiderstands bzw. dessen aktive Schicht bestimmt werden. Diese Ausführungsform leistet somit einen Beitrag, dass auf ein zusätzliches Bauteil, welches die Spannungsmessung und die Strommessung durchführt, verzichtet werden kann, da auf die ohnehin typischerweise für die Funktionsfähigkeit des Heizwiderstands notwendige Leistungselektronik zurückgegriffen wird.

Ferner kann das Ermitteln des momentanen Werts der Spannung an einer Batterie des Rekuperations-Systems erfolgen. Somit kann die Spannungsmessung alternativ bei gleichem Spannungsniveau auch außerhalb des Heizwiderstands ermittelt werden. Hierdurch ergibt sich für den Heizwiderstand die Möglichkeit, die Temperatur im aktiven Teil der Heizschicht bzw. des Heizdrahtes sehr schnell messen zu können und daher auch hohe Gradienten gut verfolgen zu können.

Bei einer längeren Nichtbenutzung des Heizwiderstands können durch kleine Spannungspulse der Widerstand und somit die Temperatur bestimmt werden. In diesem Sinne wird in einer weiteren Ausführungsform nach Ablauf eines festgelegten Zeitraums, innerhalb welchem der Heizwiderstand nicht benutzt worden ist, ein Spannungspuls an den Heizwiderstand abgegeben.

Der aktuelle Temperaturwert kann von der Leistungselektronik verarbeitet werden. Auf diese Weise kann ein sehr exakter Wert über die derzeit aufnehmbare elektrische Leistung über ein Fahrzeugkommunikationsnetz (z.B. CAN) an den Antriebsstrang ausgegeben werden. In diesem Sinne ist gemäß einer weiteren Ausführungsform vorgesehen, dass der ermittelte momentane Wert der Temperatur der aktiven Schicht des Heizwiderstands über ein Fahrzeugkommunikationsnetz an einen Antriebsstrang des Fahrzeugs übermittelt wird.

In einer Kombination mit einem Temperaturmodell welches von der Leistungselektronik berechnet bzw. bereitgestellt wird, können Aussagen über die zukünftige elektrische bzw. thermische Aufnahmefähigkeit des Heizwiderstands getroffen werden. Hierzu muss das Modell die thermischen Trägheiten sowie die Wärmeübergänge enthalten. Die mittels der vorstehend beschriebenen Strommessung und Spannungsmessung ermittelte Temperatur der aktiven Schicht des Heizwiderstands kann ebenfalls in dieses Vorhersagemodell eingebracht werden.

In diesem Sinne umfasst das Verfahren gemäß einer weiteren Ausführungsform die folgenden Schritte:
- Hinterlegen eines Temperaturmodells in einer Datenbank, wobei das Temperaturmodell thermische Trägheiten und Wärmeübergänge des Heizwiderstands umfasst,
- Berechnen einer zukünftigen elektrischen oder thermischen Aufnahmefähigkeit des Heizwiderstands basierend auf dem in der Datenbank hinterlegten Temperaturmodell und dem ermittelten momentanen Wert der Temperatur der aktiven Schicht.

Gemäß der Erfindung wird weiterhin ein Heizwiderstand für ein Rekuperations-System eines Kraftfahrzeugs bereitgestellt. Der Heizwiderstand umfasst eine aktive Schicht, einen Kühlkörper und eine Leistungselektronik, wobei die aktive Schicht dazu eingerichtet ist, elektrische Energie aufzunehmen, welche von einer Batterie des Rekuperations-Systems nicht mehr aufgenommen werden kann, da beispielsweise die Batterie bereits vollständig geladen ist oder Temperaturverhältnisse zu hoch sind. Weiterhin ist der Kühlkörper derart angeordnet und ausgeführt, dass ein Kühlmedium durch den Kühlkörper geleitet werden kann, und dass ein Wärmeübergang von der aktiven Schicht auf den Kühlkörper und das Kühlmedium erfolgen kann. Ferner ist die Leistungselektronik dazu eingerichtet, ein Verfahren gemäß dem ersten Aspekt der Erfindung durchzuführen.

Weiterhin wird ein Rekuperations-System bereitgestellt, welches einen Heizwiderstand gemäß der Erfindung umfasst. Weiterhin wird ein Fahrzeug bereitgestellt, welches ein Rekuperations-System mit einem Heizwiderstand gemäß der Erfindung umfasst. Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

Im Folgenden werden Ausführungsbeispiele der Erfindung anhand der schematischen Zeichnung näher erläutert. Hierbei zeigt:
- Fig. 1: eine Längsschnittdarstellung eines Ausführungsbeispiels eines erfindungsgemäßen Heizwiderstands für ein Rekuperations-System eines Kraftfahrzeugs,
- Fig. 2: ein Widerstands-Temperatur-Diagramm für Metalle, nicht Metalle und Supraleiter und
- Fig. 3: ein Schaubild mit Wärmeübergängen an einem Ausführungsbeispiel eines erfindungsgemäßen Heizwiderstands für ein Rekuperations-System eines Kraftfahrzeugs.

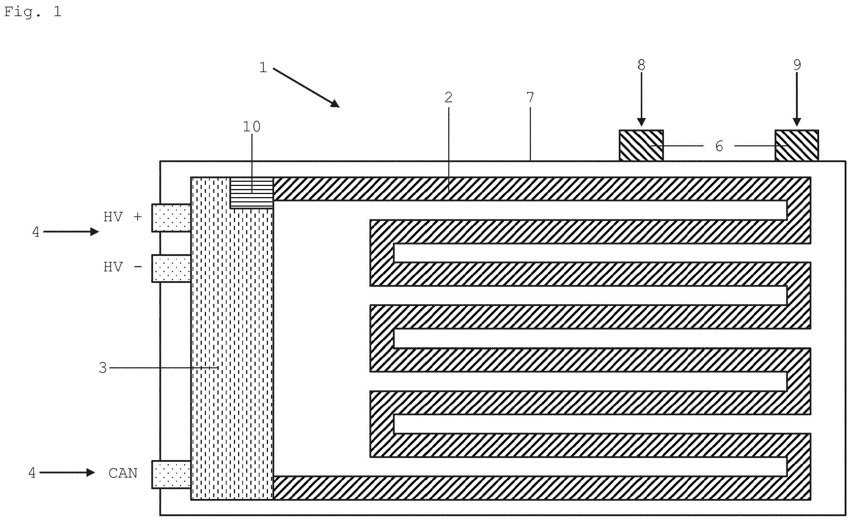

Fig. 1 zeigt einen Heizwiderstand 1 für ein Rekuperations-System eines Kraftfahrzeugs. Der Heizwiderstand 1 umfasst eine aktive Schicht 2, eine Leistungselektronik 3, einen Hochvolt-Anschluss 4 mit Pluspol und Minuspol, einen Anschluss 5 an ein Fahrzeugkommunikationsnetz in Form eines CANs, sowie einen Kühlkörper in Form eines Kühlkanals 6, welcher zur Kühlung der aktiven Schicht 2 durch ein Gehäuse 7 des Heizwiderstands 1 verläuft und einen Vorlaufanschluss 8 für ein Kühlmittel sowie einen Rücklaufanschluss 9 für das Kühlmittel aufweist.

Die aktive Schicht 2 ist dazu eingerichtet, elektrische Energie aufzunehmen, welche von einer Batterie des Rekuperations-Systems nicht mehr aufgenommen werden kann, da beispielsweise die Batterie bereits vollständig geladen ist oder Temperaturverhältnisse zu hoch sind. Durch den Kühlkanal 6 kann das Kühlmedium geleitet werden, wobei ein Wärmeübergang von der aktiven Schicht 2 auf den Kühlkanalkörper 6 und das darin befindliche Kühlmedium erfolgen kann.

In dem gezeigten Ausführungsbeispiel kann durch die Leistungselektronik 3 eine kombinierte Strom- und Spannungsmessung erfolgen. Dabei kann zu einem ersten Zeitpunkt t₁ eine Spannung U₁ gemessen werden, die an der aktiven Schicht 2 anliegt. Weiterhin kann ebenfalls zu dem ersten Zeitpunkt t₁ ein Strom I₁ gemessen werden, der durch die aktive Schicht 2 fließt. Alternativ kann das Ermitteln des momentanen Werts der Spannung U₁ an einer Batterie (nicht gezeigt) des Rekuperations-Systems erfolgen.

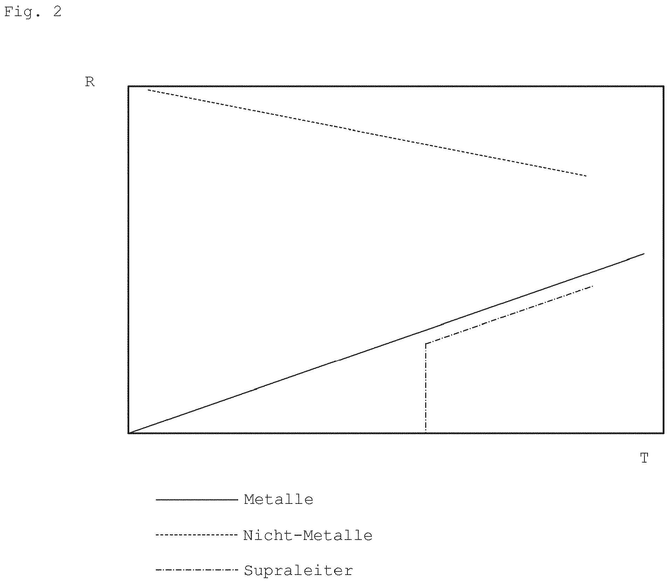

Basierend auf der gemessenen Spannung U₁ und dem gemessenen Strom I₁ kann nach dem OHMschen Gesetz der elektrische Widerstand R₁ zu dem ersten Zeitpunkt ermittelt werden (R₁=U₁/I₁). Da der ohmsche Widerstand temperaturabhängig ist (siehe Fig. 2), lässt sich mithilfe von in der Leistungselektronik hinterlegten Werten, insbesondere Wertepaaren oder einer Formel, abgleichen, welche Temperatur T₁ zu dem ersten Zeitpunkt t₁ in der aktiven Schicht im Mittel herrscht. Der ermittelte momentane Wert der Temperatur T₁ der aktiven Schicht 2 des Heizwiderstands 1 kann über das CAN an einen Antriebsstrang (nicht gezeigt) des Fahrzeugs übermittelt werden.

Beispielsweise kann die Leistungselektronik 3 eine Speichereinheit aufweisen, auf welcher in einer Datenbank mehrere Wertepaare gespeichert sind. Die einzelnen Wertepaare umfassen jeweils einen Widerstandswert Rᵢ und einen Temperaturwert Tᵢ. Die Leistungselektronik 3 kann den ermittelten Widerstandswert R₁ mit den Widerstandswerten der Wertepaare vergleichen. Beispielsweise kann ein Widerstandswert Rₓ in einem Wertepaar x dem ermittelten Widerstandswert R₁ am nächsten kommen. Wenn die Leistungselektronik 3 dies ermittelt, so kann sie den zugehörigen Temperaturwert T_{X} in dem Wertepaar x als den momentanen Wert der Temperatur T₁ der aktiven Schicht 2 auswählen. Alternativ kann auch eine Funktion der Temperatur T in Abhängigkeit von dem elektrischen Widerstand R (vgl. Fig. 2) in der Datenbank hinterlegt sein, wobei die Leistungselektronik 3 dazu eingerichtet sein kann, aus einem ermittelten momentanen Widerstandswert R₁ zu einem Zeitpunkt t₁ einen entsprechenden momentanen Temperaturwert T₁ der aktiven Schicht 2 des Heizwiderstands 1 zu ermitteln.

Im Sinne einer prädiktiven Bremsstrategie kann die Leistungselektronik 3 dazu eingerichtet sein, aus der ermittelten Temperatur T₁ abzuleiten, welche Bremsenergie noch durch den Heizwiderstand 1 aufgenommen werden kann. Wird dabei prädiziert bzw. vorausgesagt, dass noch länger gebremst wird als es die thermische Aufnahmekapazität des Heizwiderstands 1 zulässt, dann kann bereits zu dem Zeitpunkt, an dem dies prädiziert wird, eine Reibbremse (nicht gezeigt) des Rekuperations-Systems aktiviert werden. Insbesondere kann abhängig von dem Verhältnis von thermischer Aufnahmekapazität der aktiven Schicht 2 des Heizwiderstands 1 einerseits und der zu erwartenden generierten Bremsenergie andererseits ein Verhältnis von einzustellender Reibbremskraft zur Rekuperations-Bremskraft ermittelt werden.

Bei einer längeren Nichtbenutzung des Heizwiderstands 1 können durch kleine Spannungspulse der Widerstand R und somit die Temperatur T bestimmt werden.

In einer Kombination mit einem Temperaturmodell welches von der Leistungselektronik 3 berechnet bzw. bereitgestellt wird, können Aussagen über die zukünftige elektrische bzw. thermische Aufnahmefähigkeit des Heizwiderstands 1 getroffen werden. Hierzu muss das Modell die thermische Trägheit sowie die Wärmeübergänge enthalten. Die mittels der vorstehend beschriebenen Strommessung und Spannungsmessung ermittelte Temperatur T₁ der aktiven Schicht 2 des Heizwiderstands 1 kann ebenfalls in dieses Vorhersagemodell eingebracht werden.

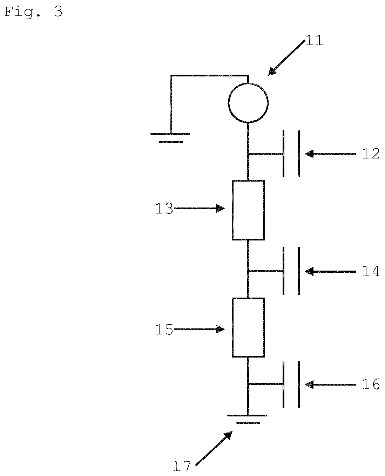

Diesbezüglich zeigt Fig. 3 ein beispielhaftes Temperaturmodell mit einer Wärmequelle 11, z.B. verursacht durch Strom bzw. Spannung in der aktiven Schicht 2 des Heizwiderstands 1. Ein die aktive Schicht 2 aufweisender Heizdraht bzw. eine Heizfläche bildet dabei eine erste Wärmekapazität 12. Ein erster Wärmeübergang 13 findet von der ersten Wärmekapazität 12 auf den Körper des Kühlkanals 6 statt, der eine zweite Wärmekapazität 14 bildet. Ein zweiter Wärmeübergang 15 findet von der zweiten Wärmekapazität 14 auf das Kühlmedium statt, welches durch den Kühlkanal 6 geleitet wird und eine dritte Wärmekapazität 16 bildet. Der Kühlkanal 6 bzw. ein durch diesen gebildeter Kühlkreislauf bildet eine Wärmesenke 17. Die drei Wärmekapazitäten 12, 14 und 16 bilden thermische Trägheiten des Heizwiderstands 1.

## Patentansprüche

1. Verfahren zur Ermittlung einer Temperatur (T₁) einer aktiven Schicht (2) eines Heizwiderstands (1) für ein Rekuperations-System eines Kraftfahrzeugs, das Verfahren umfassend die Schritte:
- Ermitteln eines momentanen Werts eines Stromes (I₁), welcher durch eine aktive Schicht (2) eines Heizwiderstands (1) fließt, zu einem ersten Zeitpunkt (t₁),
- Ermitteln eines momentanen Werts einer Spannung (U₁), welche an der aktiven Schicht (2) des Heizwiderstands (1) anliegt, zu dem ersten Zeitpunkt (t₁),
- Berechnen eines momentanen Werts eines elektrischen Widerstands (R₁) aus dem ermittelten momentanen Wert des Stromes (I₁) und aus dem ermittelten momentanen Wert der Spannung (U₁) und
- Ermitteln eines momentanen Werts einer Temperatur (T₁) der aktiven Schicht (2) aus dem berechneten Wert des elektrischen Widerstands (R₁),
**gekennzeichnet durch** den weiteren Schritt:
- Ermitteln einer zukünftigen thermischen Aufnahmekapazität der aktiven Schicht (2) basierend auf dem ermittelten momentanen Wert der Temperatur (T₁) der aktiven Schicht (2).

2. Verfahren zum Betrieb eines Rekuperations-Systems eines Kraftfahrzeugs mit einem Heizwiderstand (1), mit den Schritten:
- Ermittlung einer Temperatur (T₁) einer aktiven Schicht (2) des Heizwiderstands (1) für das Rekuperations-System mit den Schritten gemäß Anspruch 1,
- Vorhersagen einer voraussichtlichen Bremsdauer,
- Ermitteln einer von dem Heizwiderstand (1) aufzunehmenden thermischen Energie basierend auf der vorhergesagten voraussichtlichen Bremsdauer,
- Aktivieren einer Reibbremse des Rekuperations-Systems, sofern die ermittelte, von dem Heizwiderstand (1) aufzunehmende thermische Energie die ermittelte thermische Aufnahmekapazität der aktiven Schicht (2) übersteigt.

3. Verfahren zum Betrieb eines Rekuperations-Systems gemäß Anspruch 2, mit dem weiteren Schritt:
- Ermitteln eines Verhältnisses von einer einzustellenden Reibbremskraft zur Rekuperations-Bremskraft in Abhängigkeit von einem Verhältnis der ermittelten thermischen Aufnahmekapazität der aktiven Schicht (2) des Heizwiderstands (1) einerseits und einer zu erwartenden generierten Bremsenergie andererseits.

4. Verfahren gemäß einem der vorhergehenden Ansprüche, wobei das Ermitteln des momentanen Werts der Temperatur (T₁) der aktiven Schicht (2) die folgenden Schritte umfasst:
- Hinterlegen von Wertepaaren, die jeweils einen Wert eines elektrischen Widerstands (Rᵢ) und einen Wert einer Temperatur (Tᵢ) umfassen, in einer Datenbank,
- Ermitteln desjenigen in der Datenbank hinterlegten Werts des elektrischen Widerstands (Rₓ), welcher dem berechneten momentanen Wert des elektrischen Widerstands (R₁) der aktiven Schicht (2) am nächsten kommt, und
- Auswählen des in der Datenbank in demselben Wertepaar hinterlegten zugeordneten Werts der Temperatur (Tₓ) als momentanen Wert der Temperatur (T₁) der aktiven Schicht.

5. Verfahren nach einem der vorstehenden Ansprüche, wobei das Ermitteln des momentanen Werts des Stroms (I₁) und das Ermitteln des momentanen Werts der Spannung (U₁) mittels einer Leistungselektronik (3) des Heizwiderstands (1) erfolgen.

6. Verfahren nach einem der vorstehenden Ansprüche, wobei das Ermitteln des momentanen Werts der Spannung (U₁) an einer Batterie des Rekuperations-Systems erfolgt.

7. Verfahren nach einem der vorstehenden Ansprüche, wobei nach Ablauf eines festgelegten Zeitraums, innerhalb welchem der Heizwiderstand (1) nicht benutzt worden ist, ein Spannungspuls an den Heizwiderstand (1) abgegeben wird.

8. Verfahren nach einem der vorstehenden Ansprüche, wobei der ermittelte momentane Wert der Temperatur (T₁) der aktiven Schicht (2) des Heizwiderstands (1) über ein Fahrzeugkommunikationsnetz (CAN) an einen Antriebsstrang des Fahrzeugs übermittelt wird.

9. Verfahren nach einem der vorstehenden Ansprüche, weiterhin umfassend:
- Hinterlegen eines Temperaturmodells in einer Datenbank, wobei das Temperaturmodell thermische Trägheiten (12, 14, 16) und Wärmeübergänge (13, 15) des Heizwiderstands (1) umfasst,
- Berechnen einer zukünftigen elektrischen oder thermischen Aufnahmefähigkeit des Heizwiderstands (1) basierend auf dem in der Datenbank hinterlegten Temperaturmodell und dem ermittelten momentanen Wert der Temperatur (T₁) der aktiven Schicht (2) .

10. Heizwiderstand (1) für ein Rekuperations-System eines Kraftfahrzeugs, der Heizwiderstand (1) umfassend:
- eine aktive Schicht (2),
- einen Kühlkörper (6),
- und eine Leistungselektronik (3),
wobei
- die aktive Schicht (2) dazu eingerichtet ist, elektrische Energie aufzunehmen, welche von einer Batterie des Rekuperations-Systems nicht mehr aufgenommen werden kann,
- der Kühlkörper (6) derart angeordnet und ausgeführt ist, dass ein Kühlmedium durch den Kühlkörper (6) geleitet werden kann, und dass ein Wärmeübergang von der aktiven Schicht auf den Kühlkörper (6) und das Kühlmedium erfolgen kann, und
- die Leistungselektronik (3) dazu eingerichtet ist, ein Verfahren nach einem der vorstehenden Ansprüche durchzuführen.

11. Rekuperations-System umfassend einen Heizwiderstand (1) nach Anspruch 10.

12. Fahrzeug umfassend ein Rekuperations-System nach Anspruch 11.

## Claims

1. Method for determining a temperature (T₁) of an active layer (2) of a heating resistor (1) for a recuperation system of a motor vehicle, the method comprising the steps of:
- determining an instantaneous value of a current (I₁) flowing through an active layer (2) of a heating resistor (1) at a first time (t₁),
- determining an instantaneous value of a voltage (U₁) that is present on the active layer (2) of the heating resistor (1) at the first time (t₁),
- calculating an instantaneous value of an electrical resistance (R₁) from the determined instantaneous value of the current (I₁) and from the determined instantaneous value of the voltage (U₁) and
- determining an instantaneous value of a temperature (T₁) of the active layer (2) from the calculated value of the electrical resistance (R₁),
**characterized by** the further step of:
- determining a future thermal absorption capacity of the active layer (2) based on the determined instantaneous value of the temperature (T₁) of the active layer (2).

2. Method for operating a recuperation system of a motor vehicle having a heating resistor (1), having the steps of:
- determining a temperature (T₁) of an active layer (2) of the heating resistor (1) for the recuperation system with the steps according to Claim 1,
- predicting an anticipated braking time,
- determining an amount of thermal energy to be absorbed by the heating resistor (1) based on the predicted anticipated braking time,
- activating a friction brake of the recuperation system if the determined thermal energy to be absorbed by the heating resistor (1) exceeds the determined thermal absorption capacity of the active layer (2).

3. Method for operating a recuperation system according to Claim 2, having the further step of:
- determining a ratio of a friction braking force to be set to the recuperation braking force depending on a ratio of the determined thermal absorption capacity of the active layer (2) of the heating resistor (1), on the one hand, and an expected generated braking energy, on the other hand.

4. Method according to one of the preceding claims, wherein determining the instantaneous value of the temperature (T₁) of the active layer (2) comprises the following steps:
- storing pairs of values that each comprise a value of an electrical resistance (Rᵢ) and a value of a temperature (Tᵢ) in a database,
- determining that value of the electrical resistance (Rₓ) stored in the database that comes closest to the calculated instantaneous value of the electrical resistance (R₁) of the active layer (2), and
- selecting the associated value of the temperature (Tₓ), stored in the database in the same pair of values, as the instantaneous value of the temperature (T₁) of the active layer.

5. Method according to one of the preceding claims, wherein the instantaneous value of the current (I₁) and the instantaneous value of the voltage (U₁) are determined by way of power electronics (3) of the heating resistor (1).

6. Method according to one of the preceding claims, wherein the instantaneous value of the voltage (U₁) is determined on a battery of the recuperation system.

7. Method according to one of the preceding claims, wherein a voltage pulse is emitted to the heating resistor (1) after the expiry of a defined period of time within which the heating resistor (1) has not been used.

8. Method according to one of the preceding claims, wherein the determined instantaneous value of the temperature (T₁) of the active layer (2) of the heating resistor (1) is transmitted to a drivetrain of the vehicle via a vehicle communication network (CAN).

9. Method according to one of the preceding claims, furthermore comprising:
- storing a temperature model in a database, wherein the temperature model comprises thermal inertias (12, 14, 16) and heat transfers (13, 15) of the heating resistor (1),
- calculating a future electrical or thermal absorption capacity of the heating resistor (1) based on the temperature model stored in the database and the determined instantaneous value of the temperature (T₁) of the active layer (2).

10. Heating resistor (1) for a recuperation system of a motor vehicle, the heating resistor (1) comprising:
- an active layer (2),
- a heat sink (6),
- and power electronics (3),
wherein
- the active layer (2) is configured so as to absorb electrical energy that is no longer able to be absorbed by a battery of the recuperation system,
- the heat sink (6) is arranged and designed such that a coolant is able to be channeled through the heat sink (6) and that heat is able to be transferred from the active layer to the heat sink (6) and the coolant, and
- the power electronics (3) are configured so as to perform a method according to one of the preceding claims.

11. Recuperation system comprising a heating resistor (1) according to Claim 10.

12. Vehicle comprising a recuperation system according to Claim 11.

## Revendications

1. Procédé de détermination d'une température (T₁) d'une couche active (2) d'une résistance chauffante (1) pour un système de récupération d'un véhicule automobile, le procédé comprenant les étapes suivantes :
- la détermination d'une valeur instantanée d'un courant (I₁), qui traverse une couche active (2) d'une résistance chauffante (1), à un premier instant (t₁),
- la détermination d'une valeur instantanée d'une tension (U₁), qui est appliquée à la couche active (2) de la résistance chauffante (1), au premier instant (t₁),
- le calcul d'une valeur instantanée d'une résistance électrique (R₁) à partir de la valeur instantanée déterminée du courant (I₁) et de la valeur instantanée déterminée de la tension (U₁), et
- la détermination d'une valeur instantanée d'une température (T₁) de la couche active (2) à partir de la valeur calculée de la résistance électrique (R₁),
**caractérisé par** l'étape supplémentaire suivante :
- la détermination d'une capacité d'absorption thermique future de la couche active (2) sur la base de la valeur instantanée déterminée de la température (T₁) de la couche active (2).

2. Procédé d'exploitation d'un système de récupération d'un véhicule automobile comprenant une résistance chauffante (1), comprenant les étapes suivantes :
- la détermination d'une température (T₁) d'une couche active (2) de la résistance chauffante (1) pour le système de récupération, comprenant les étapes selon la revendication 1,
- l'estimation d'une durée de freinage prévue,
- la détermination d'une énergie thermique devant être absorbée par la résistance chauffante (1) sur la base de la durée de freinage prévue estimée,
- l'activation d'un frein à friction du système de récupération si l'énergie thermique déterminée devant être absorbée par la résistance chauffante (1) dépasse la capacité d'absorption thermique déterminée de la couche active (2).

3. Procédé d'exploitation d'un système de récupération selon la revendication 2, comprenant l'étape supplémentaire suivante :
- la détermination d'un rapport entre une force de freinage par friction devant être réglée et une force de freinage de récupération en fonction d'un rapport entre la capacité d'absorption thermique déterminée de la couche active (2) de la résistance chauffante (1) d'une part et une énergie de freinage générée attendue d'autre part.

4. Procédé selon l'une quelconque des revendications précédentes, dans lequel la détermination de la valeur instantanée de la température (T₁) de la couche active (2) comprend les étapes suivantes :
- l'enregistrement de paires de valeurs, qui comprennent chacune une valeur d'une résistance électrique (Rᵢ) et une valeur d'une température (Tᵢ), dans une base de données,
- la détermination de la valeur de la résistance électrique (Rₓ) enregistrée dans la base de données qui est la plus proche de la valeur instantanée calculée de la résistance électrique (R₁) de la couche active (2), et
- la sélection de la valeur de la température (Tₓ) associée enregistrée dans la base de données dans la même paire de valeurs comme valeur instantanée de la température (T₁) de la couche active.

5. Procédé selon l'une quelconque des revendications précédentes, dans lequel la détermination de la valeur instantanée du courant (I₁)et la détermination de la valeur instantanée de la tension (U₁) sont effectuées au moyen d'une électronique de puissance (3) de la résistance chauffante (1).

6. Procédé selon l'une quelconque des revendications précédentes, dans lequel la détermination de la valeur instantanée de la tension (U₁) s'effectue sur une batterie du système de récupération.

7. Procédé selon l'une quelconque des revendications précédentes, dans lequel une impulsion de tension est délivrée à la résistance chauffante (1) après l'écoulement d'une période préétablie pendant laquelle la résistance chauffante (1) n'a pas été utilisée.

8. Procédé selon l'une quelconque des revendications précédentes, dans lequel la valeur instantanée déterminée de la température (T₁) de la couche active (2) de la résistance chauffante (1) est transmise à une chaîne cinématique du véhicule par l'intermédiaire d'un réseau de communication de véhicule (CAN).

9. Procédé selon l'une quelconque des revendications précédentes, comprenant en outre :
- l'enregistrement d'un modèle de température dans une base de données, le modèle de température comprenant des inerties thermiques (12, 14, 16) et des transferts de chaleur (13, 15) de la résistance chauffante (1),
- le calcul d'une capacité d'absorption électrique ou thermique future de la résistance chauffante (1) sur la base du modèle de température enregistré dans la base de données et de la valeur instantanée déterminée de la température (T₁) de la couche active (2).

10. Résistance chauffante (1) pour un système de récupération d'un véhicule automobile, la résistance chauffante (1) comprenant :
- une couche active (2),
- un dissipateur de chaleur (6),
- et une électronique de puissance (3),
dans laquelle
- la couche active (2) est adaptée pour absorber l'énergie électrique qui ne peut plus être absorbée par une batterie du système de récupération,
- le dissipateur de chaleur (6) est agencé et conçu de telle sorte qu'un fluide de refroidissement peut être acheminé à travers le dissipateur de chaleur (6), et qu'un transfert de chaleur peut avoir lieu de la couche active vers le dissipateur de chaleur (6) et le fluide de refroidissement, et
- l'électronique de puissance (3) est adaptée pour mettre en œuvre un procédé selon l'une quelconque des revendications précédentes.

11. Système de récupération comprenant une résistance chauffante (1) selon la revendication 10.

12. Véhicule comprenant un système de récupération selon la revendication 11.
